# EUROPEAN PATENT SPECIFICATION

(11) **EP 1 658 420 B1**
(45) Date of publication and mention of the grant of the patent: **11.02.2009**
(21) Application number: 04771416.7
(22) Date of filing: 03.08.2004
(51) Int. Cl.: F01N 3/10, B01D 53/34, B01J 23/63, B01J 21/06

(54) **METHOD OF EVALUATING LOW-TEMPERATURE PURIFYING ABILITY OF CATALYSTS FOR PURIFYING EXHAUST GASES**
VERFAHREN ZUR BEURTEILUNG DER NIEDRIGTEMPERATURREINIGUNGSLEISTUNG VON KATALYSATOREN ZUR REINIGUNG VON ABGASEN
PROCEDE POUR EVALUER LA CAPACITE DE PURIFICATION A BASSES TEMPERATURES DES CATALYSEUR POUR PURIFIER DES GAZ D'ECHAPPEMENT

(30) Priority: 25.08.2003 JP 2003300410
(43) Date of publication of application: 24.05.2006
(73) Proprietor: Toyota Jidosha Kabushiki Kaisha, Toyota-shi, Aichi 471-8571 (JP)
(72) Inventor: SUZUKI, Hiromasa, TOYOTA JIDOSHA KABUSHIKI KAISHA, Toyota-shi, Aichi 4718571 (JP)
(74) Representative: Kuhnen & Wacker
(86) International application number: PCT/JP2004/011429
(87) International publication number: WO 2005/019615

(56) References cited:
- EP-A- 0 988 890
- EP-A- 1 166 855
- EP-A- 1 214 967
- US-B1- 6 335 305

## Description

### Technical Field

The present invention relates to a method of evaluating the purifying ability of the catalyst in low temperature regions.

### Background Art

As for catalysts for purifying automotive exhaust gases, three-way catalysts have been used conventionally to purify them. The three-way catalysts oxidize CO and HC in the exhaust gases, and simultaneously reduce NOₓ therein. As for one of such three-way catalysts, a three-way catalyst has been known widely which comprises a heat-resistant honeycomb substrate composed of cordierite, a support layer composed of γ-alumina and formed on the substrate, and a catalytic ingredient, such as platinum (Pt) and rhodium (Rh), loaded on the loading layer, for instance.

As the requirements for the supports used in catalysts for purifying exhaust gases, it is required to have a large specific surface area and to exhibit high heat resistance. In general, alumina, zirocnia and titania have been used often. Moreover, it has been carried out as well to combinedly use ceria (CeO₂) having an oxygen sorbing-and-releasing ability (hereinafter referred to as "OSC") as a co-catalyst in order to enhance the purifying ability by relieving the atmospheric fluctuation of exhaust gases.

However, ceria is likely to cause granular growth in high temperature regions. Accordingly, there arises a problem that the loaded catalytic ingredient also undergoes granular growth to degrade the catalytic activity. Consequently, it has been carried out as well to stabilize ceria by adding zirconia thereto and to use CeO₂-ZrO₂ composite oxides (or solid solutions) whose heat resistance is improved as the support.

For example, Japanese Unexamined Patent Publication (KOKAI) No. 8-215,569 discloses a technique using a CeO₂-ZrO₂ composite oxide which is prepared from metallic alkoxides. In CeO₂-ZrO₂ composite oxides which are prepared from metallic alkoxides by sol-gel methods, the heat resistance of the resulting CeO₂-ZrO₂ composite oxides is improved, because the CeO₂-ZrO₂ composite oxides are in the state of solid solution that Ce and Zr are composited at atomic or molecular level. Moreover, the thus obtained CeO₂-ZrO₂ composite oxides exhibit a high OSC securely from the initial period to even after a durability test.

A catalyst with a catalytic ingredient loaded on a CeO₂-ZrO₂ composite oxide has an advantage that the granular growth of the catalytic ingredient is less likely to occur compared with a catalyst with a catalytic ingredient loaded on alumina. On the other hand, a catalyst comprising a support consisted of a CeO₂-ZrO₂ composite oxide only suffers from a problem that the high-temperature purifying activity is low compared with a catalyst with a catalytic ingredient loaded on alumina. Hence, it has been carried out to use a mixture of CeO₂-ZrO₂ composite oxides and porous oxides, such as alumina, as a support.

For instance, Japanese Unexamined Patent Publication (KOKAI) No. 2000-176,282 discloses a catalyst for purifying exhaust gases. The catalyst comprises a support made of a mixture of an oxide solid solution, composed of a CeO₂-ZrO₂ solid solution that is further composited with an oxide of rare-earth elements, and a porous oxide, such as alumina, and a noble metal loaded on at least one of the oxide solid solution and the porous oxide. The catalyst is excellent in terms of the durability of purifying ability, because it shows a high OSC, and because the OSC is inhibited from degrading after a durability test.

In the conventional catalyst for purifying exhaust gases in which the support is made of the mixture of CeO₂-ZrO₂ solid solutions and porous oxides such as alumina, it is desirable to enlarge the compounding amount of CeO₂-ZrO₂ solid solutions in order to further inhibit the granular growth of catalytic ingredients. However, it has been found out that, when the compounding amount of CeO₂-ZrO₂ solid solutions is enlarged, the purifying ability of the resulting catalysts has been degraded in low temperature regions.

### Disclosure of Invention

The present invention has been developed in view of such circumstances. It is therefore an object of the present invention, to make it possible to readily and reliably evaluate the low-temperature purifying ability of a catalyst for purifying exhaust gases in which a catalytic ingredient is loaded on a support comprising at least an oxide comprising cerium.

According to the present invention, a method of evaluating a purifying ability of a catalyst in low temperature regions, the catalyst comprising a support comprising at least an oxide comprising cerium, and a catalytic ingredient loaded on the support, comprises the steps of:
assuming a heat capacity and an oxygen sorbing amount of the catalyst; and
evaluating the low-temperature purifying ability of the catalyst to be excellent when a value of the oxygen sorbing amount with respect to the heat capacity, an oxygen sorbing amount/heat capacity value, falls in a range of from 4 × 10⁻³ to 8 × 10⁻³ (g·J⁻¹·K).

Note that it is desirable that the low-temperature purifying ability of the catalyst can be evaluated to be more excellent when the oxygen sorbing amount/heat capacity value falls in a range of from 5 × 10⁻³ to 7 × 10⁻³ (g·J⁻¹·K).

### Brief Description of the Drawing

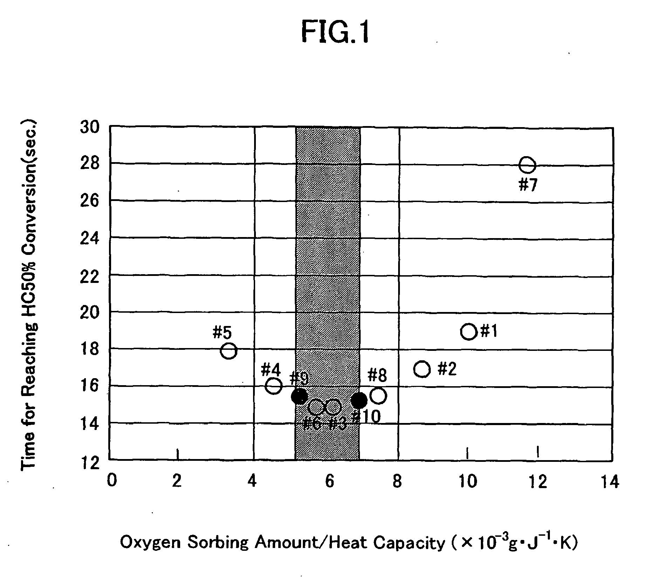

Fig. 1 is a graph for showing the relationship between the oxygen sorbing amount/heat capacity value exhibited by each catalyst used in testing examples and the time for reaching HC 50% conversion exhibited by the same.

### Best Mode for Carrying out the Invention

In the present method of evaluating the low-temperature purifying ability, the low-temperature purifying ability of a catalyst for purifying exhaust gases is evaluated to be excellent when the oxygen sorbing amount/heat capacity value falls in a range of from 4 × 10⁻³ to 8 × 10⁻³ (g·J⁻¹·K). Because the present catalyst whose oxygen sorbing amount/heat capacity value falls in the range exhibits a high catalytic activity in low temperature regions, it shows a high purifying activity even when starting engines. When enlarging the ceria component so as to let the oxygen sorbing amount/heat capacity value fall in the aforementioned range, the present catalyst is improved in terms of the heat-resistant durability greatly, because it can not only demonstrate a high OSC but also suppress the granular growth of the catalytic ingredient.

As for the oxide comprising cerium, it is possible to exemplify CeO₂, CeO₂-ZrO₂ composite oxides (or solid solutions) and Al₂O₃-CeO₂-ZrO₂ composite oxides. Moreover, it is preferable to use composite oxides further comprising at least one element selected from the group consisting of rare-earth elements except cerium. When the composite oxides further comprise at least one additive rare-earth element, the resulting catalyst is improved in terms of the heat resistance, and is simultaneously furthermore upgraded in terms of the OSC.

When using CeO₂-ZrO₂ composite oxides as the oxide comprising cerium, it is further preferred that a Ce/Zr atomic ratio is in a range of 1/9-9/1 by mol, and or especially in a range of 3/7-7/3 by mol. When the Ce element is less than the lower limit, the absolute OSC might be apt to be insufficient. When the Zr element is less than the lower limit, the heat-resistant stability of the resulting CeO₂-ZrO₂ composite oxides might be apt to degrade.

Moreover, as for the aforementioned additive rare-earth element, it is preferable to use La, Pr, Nd and Sm. Note that it is especially preferable to use at least one of La and Pr. With respect to the composite oxides comprising cerium and the additive rare-earth element taken as 100% by weight, it is preferable that the additive rare-earth element is in an amount of from 5 to 20% by weight as oxide. When the amount of the additive rare-earth element is less than the lower limit, the effect of the additive rare-earth element might be small. When the amount of the additive rare-earth element is more than the upper limit, not only the addition effect saturates but also the purifying ability of the resulting composite oxides might degrade because the amount of the ceria component decreases relatively.

The support used in the present catalyst comprises at least an oxide comprising cerium. The support can be made of the aforementioned oxide comprising cerium alone. Alternatively, it is preferable to make the support by mixing the oxide with the other oxides such as alumina. In this instance, the resulting catalyst demonstrates a stable catalytic activity from low temperature regions up to high temperature regions, because the purifying ability in high temperature regions is improved by mixing the oxide with a pours oxide such as alumina. Moreover, when mixing the oxide with an oxide such as alumina, the degree of expansion/contraction of the resultant support becomes small. Thus, it is possible to suppress such a drawback that a coating layer comes off a support substrate.

The oxide comprising cerium exhibits a relatively large heat capacity. On the other hand, a porous oxide such as alumina exhibits a relatively small heat capacity. Moreover, only the oxide comprising cerium substantially exhibits an oxygen sorbing amount. Therefore, in order to set the oxygen sorbing amount/heat capacity value of catalysts so as to fall in the aforementioned range, it is preferable to control the value by the mixing amount of the oxide comprising cerium with a porous oxide such as alumina.

It is possible to produce composite oxides, such as CeO₂-ZrO₂ composite oxides or composite oxides comprising an oxide of the additive rare-earth elements, by alkoxide methods or co-precipitation methods. Among them, the co-precipitation methods produce an advantage that the resulting composite oxides are less expensive, because the raw material cost is less expensive compared with the alkoxide methods. Hence, the co-precipitation methods have been used widely in the production of composite oxides.

As for the catalytic ingredient loaded on the support, it is possible to use one member or a plurality of members selected from the group consisting of platinum-group elements such as Pt, Rh, Pd and Ir. Among them, it is preferable to load both of highly active Pt and Rh on the support. Moreover, when the support is composed of a mixture of the oxide comprising cerium and the other oxide such as alumina, it is preferable to load the catalytic ingredient mainly on the oxide comprising cerium. Specifically, it is preferable to load from 20 to 100% by weight, further from 50 to 100% by weight, furthermore from 80 to 100% by weight of the catalytic ingredient on the oxide comprising cerium. Thus, it is possible to furthermore suppress the granular growth of the catalytic ingredient at high temperatures. As a result, the resulting catalyst is furthermore improved in terms of the heat-resistant durability. Note that the loading amount of the catalytic ingredient can preferably fall in a range of from 0.1 to 10% by weight with respect to the sum of the support and the catalytic ingredient taken as 100% by weight.

When assuming the heat capacity of the catalyst, it is advisable to assume the heat capacity of the support only, because the loading amount of the catalytic ingredient is extremely less so that the heat capacity of the catalytic ingredient can be ignored. When the respective heat capacities of oxide species included in the support are known, it is possible to assume the heat capacity of the support by calculation using the content ratio of each oxide species therein which is found in advance. Moreover, it is preferable to determine the oxygen sorbing amount of the present catalyst by actually measuring it, because the oxygen sorbing amount depends not only on the content of the ceria component but also on the species and the loading amount of the loaded catalytic ingredient. The measurement of the oxygen sorbing amount can be carried out with ease by detecting an oxygen concentration in inlet exhaust gases and an oxygen concentration in outlet exhaust gases.

Namely, the present catalyst for purifying exhaust gases is excellent in terms of the purifying ability in low temperature regions, and is excellent in terms of the durability as well. Moreover, the present evaluation method can easily and securely evaluate the low-temperature purifying ability of catalysts, and can sharply reduce the man-hour requirements required for designing and developing catalysts for purifying exhaust gases.

### EXAMPLES

Hereinafter, the present invention will be described in detail with reference to experimental examples.

### (Catalyst No. 1)

First, two commercially available CeO₂-ZrO₂ solid solution powders were prepared. These solid solution powders differed in that the composition ratio of the respective oxides was different as set forth below. In order to distinguish them, the solid solution powder in which CeO₂ was present more than ZrO₂ will be hereinafter referred to as a Ce-Zr solid solution powder, and the solid solution powder in which ZrO₂ was present more than CeO₂ will be hereinafter referred to as a Zr-Ce solid solution powder.
Ce-Zr Solid Solution Powder (CeO₂ : ZrO₂ : Pr₂O₅ : La₂O₃ = 60 : 30 : 5 : 5 by weight)
Zr-Ce Solid Solution Powder (CeO₂ : ZrO₂ : Pr₂O₅ : La₂O₃ = 30 : 60 : 5 : 5 by weight)

200 g of the Ce-Zr solid solution powder was impregnated with a predetermined amount of a platinum dinitrodiammine aqueous solution having a prescribed concentration, and was calcined at 500 °C after evaporation to dryness, thereby loading Pt in an amount of 1.5 g.

120 g of the Zr-Ce solid solution powder was impregnated with a predetermined amount of a rhodium nitrate aqueous solution having a prescribed concentration, and was calcined at 500°C after evaporation to dryness, thereby loading Rh in an amount of 1.5 g.

All of the resulting two catalytic powders were mixed with each other, and were further mixed with 40g of an alumina powder, alumina sol and an appropriate amount of water, thereby preparing a slurry. Note that the alumina content of the alumina sol was 20 g as solid. Then, a honeycomb substrate was immersed into the slurry, and was taken up therefrom to remove the excessive slurry by suction. Note that the honeycomb substrate was made of cordierite and had a volume of 1 L. After drying the slurry, the honeycomb substrate was calcined at 250 °C to form a coating layer, thereby preparing Catalyst No. 1. Table 1 recites the composition of the coating layer.

### (Catalyst Nos. 2 through 8)

Except that the same Ce-Zr solid solution powder and Zr-Ce solid solution powder as used in Catalyst No. 1 were used so as to set the composition of the coating layer as recited in Table 1 for each coating layer, each of Catalyst Nos. 2 through 8 was prepared in the same manner as Catalyst No. 1.

### (Catalyst No. 9)

Except that a Ce-Zr solid solution powder and a Zr-Ce solid solution powder having the following compositions were used, Catalyst No. 9 was prepared in the same manner as Catalyst No. 3.
Ce-Zr Solid Solution Powder (CeO₂ : ZrO₂ : Pr₂O₅ : La₂O₃ = 55 : 35 : 5 :5 by weight)
Zr-Ce Solid Solution Powder (CeO₂ : ZrO₂ : Pr₂O₅ : La₂O₃ = 25 : 65 : 5 : 5 by weight)

### (Catalyst No. 10)

Except that a Ce-Zr solid solution powder and a Zr-Ce solid solution powder having the following compositions were used, Catalyst No. 10 was prepared in the same manner as Catalyst No. 3.
Ce-Zr Solid Solution Powder (CeO₂ : ZrO₂ : Pr₂O₅ : La₂O₃ = 70 : 20 : 5 : 5 by weight)
Zr-Ce Solid Solution Powder (CeO₂ : ZrO₂ : Pr₂O₅ : La₂O₃ = 35 : 55 : 5 : 5 by weight)

**TABLE 1**

| Catalyst | Coating Layer Composition (g/L) | | | Heat Capacity of Coating Layer (J/K) | Characteristic Values | | |
|---|---|---|---|---|---|---|---|
| | Ce-Zr Solid Solution | Zr-Ce Solid Solution | Alumina | | Oxygen Sorbing Amount (g) | Oxygen Sorbing Amount/Heat Capacity | Times for Reaching HC 50% Conversion (sec.) |
| No. 1 | 200 | 120 | 40 | 132.6 | 1.30 | 9.80 × 10⁻³ | 19 |
| No. 2 | 180 | 100 | 40 | 115.8 | 1.00 | 8.64 × 10⁻³ | 17 |
| No. 3 | 150 | 80 | 40 | 95.0 | 0.60 | 6.32 × 10⁻³ | 15 |
| No. 4 | 120 | 60 | 40 | 74.3 | 0.35 | 4.71 × 10⁻¹ | 16 |
| No. 5 | 100 | 40 | 40 | 57.5 | 0.20 | 3.48 × 10⁻³ | 18 |
| No. 6 | 150 | 40 | 40 | 77.4 | 0.45 | 5.81 × 10⁻³ | 15 |
| No. 7 | 250 | 40 | 40 | 117.4 | 1.35 | 11.50 × 10⁻³ | 28 |
| No. 8 | 120 | 100 | 40 | 91.9 | 0.69 | 7.51 × 10⁻¹ | 15.5 |
| No. 9 | 150 | 80 | 40 | 95.1 | 0.52 | 5.47 × 10⁻¹ | 15.5 |
| No. 10 | 150 | 80 | 40 | 93.0 | 0.65 | 6.99 × 10⁻³ | 15 |

### <Experimental Examples>

The heat capacity of the coating layer in the above-described respective catalysts was found by calculation. Table 1 summarizes the results.

Next, each of the catalysts was disposed in an exhaust system of a bench-testing apparatus equipped with a 4.3-L gasoline engine boarded, respectively, and a 100-hour durability treatment was carried out at a catalyst-bed temperature of 1,000°C. Each of the catalysts after the durability treatment was kept to be disposed in the exhaust system of the bench-testing apparatus, respectively, and exhaust gases whose A/F was vibrated in a specific cycle were flowed through the bench-testing apparatus at a catalytic-bed temperature of 670 °C. While flowing the exhaust gases, each catalyst was examined for the oxygen sorbing amount by detecting the signal variations of an A/F sensor disposed on an upstream side of the catalyst and an O₂ sensor disposed on a downstream side thereof. Table 1 recites the results. Moreover, the oxygen sorbing amount/heat capacity value was calculated for each catalyst. Table 1 summarizes the results.

Moreover, each of the catalysts after the durability treatment was kept to be disposed in the exhaust system of the above-described bench-testing apparatus, respectively, the catalyst-bed temperature was set at 50 °C, and 400 °C exhaust gases were introduced into each of the catalysts. In this instance, each catalyst was measured for the HC conversion with time. Moreover, the time required for the HC conversion to be 50% (i.e., time for reaching HC 50% conversion) was calculated for each catalyst. Table 1 recites the results.

In Fig. 1, the oxygen sorbing amount/heat capacity value and the time for reaching HC 50% conversion are plotted for each catalyst. From Fig. 1, when the oxygen sorbing amount/heat capacity value fell in a range of from 4 × 10⁻³ to 8 × 10⁻³ (g·J⁻¹·K), the time for reaching HC 50% conversion was less than 18 seconds. Accordingly, it is apparent that Catalyst Nos. 3, 4, 6, 8, 9 and 10 exhibiting such a value were excellent in terms of the HC purifying ability in low temperature regions even after the durability treatment. Moreover, when the oxygen sorbing amount/heat capacity value fell in a range of from 5 × 10⁻³ to 7 × 10⁻³ (g·J⁻¹·K), the time for reaching HC 50% conversion became less than 16 seconds. Consequently, it is evident that Catalyst Nos. 3, 6, 9 and 10 were much more excellent in terms of the HC purifying ability in low temperature regions even after the durability treatment. Note that, as far as being a catalyst demonstrating a high conversion after the durability treatment, it is needless to say that such a catalyst can show a high conversion as well in the initial period before being subjected to the durability treatment.

## Claims

1. A method of evaluating a purifying ability of a catalyst in low temperature regions, the catalyst comprising a support comprising at least an oxide comprising cerium, and a catalytic ingredient loaded on the support, the method comprising the steps of:
assuming a heat capacity and an oxygen sorbing amount of the catalyst; and
evaluating the low-temperature purifying ability of the catalyst to be excellent when a value of the oxygen sorbing amount with respect to the heat capacity, an oxygen sorbing amount/heat capacity value, falls in a range of from 4 × 10⁻³ to 8 × 10⁻³ (g·J⁻¹·K).

2. The method set forth in claim 1, wherein the low-temperature purifying ability of the catalyst is evaluated to be more excellent when the oxygen sorbing amount/heat capacity value falls in a range of from 5 × 10⁻³ to 7 × 10⁻³ (g·J⁻¹·K).

## Patentansprüche

1. Verfahren zum Bestimmen des Reinigungsvermögens eines Katalysators in niedrigen Temperaturbereichen, wobei der Katalysator ein Trägermaterial umfasst, dass wenigstens ein Cerium umfassendes Oxid umfasst und einen auf das Trägermaterial aufgebrachten katalytischen Bestandteil, wobei das Verfahren die folgenden Schritte umfasst:
Annehmen einer Wärmekapazität und einer Sauerstoff-Sorptionsmenge des Katalysators; und
Bewerten des Reinigungsvermögens im niedrigen Temperaturbereich des Katalysator als ausgezeichnet, wenn der Wert der Sauerstoff-Sorptionsmenge bezüglich der Wärmekapazität, der Sauerstoff-Sorptionsmenge/Wärmekapaziät-Wert in einem Bereich von 4 x 10-3 bis 8 x 10-3 (g·J-1·K) liegt.

2. Verfahren nach Anspruch 1, wobei das Reinigungsvermögens im niedrigen Temperaturbereich des Katalysators als noch ausgezeichneter bewertet wird, wenn der Sauerstoff-Sorptionsmenge/Wärmekapaziät-Wert in einem Bereich von 5 x 10-3 bis 7 x 10-3 (g·J-1·K) liegt.

## Revendications

1. Procédé d'évaluation de l'aptitude à l'épuration d'un catalyseur dans des régions à basse température, le catalyseur comprenant un support comprenant au moins un oxyde comprenant du cérium, et un ingrédient catalytique chargé sur le support, le procédé comprenant les étapes de :
admettre une capacité calorifique et une quantité de sorption d'oxygène du catalyseur ; et
évaluer l'aptitude à l'épuration à basse température du catalyseur comme étant excellente quand une valeur de la quantité de sorption d'oxygène par rapport à la capacité calorifique, une valeur quantité de sorption d'oxygène/capacité calorifique, est située dans une plage de 4 x 10⁻³ à 8 x 10⁻³ (g.J⁻¹.K).

2. Procédé selon la revendication 1 où l'aptitude à l'épuration à basse température du catalyseur est évaluée comme étant plus excellente quand la valeur quantité de sorption d'oxygène/capacité calorifique est située dans une plage de 5 x 10⁻³ à 7 x 10⁻³ (g.J⁻¹.K).
